# EUROPEAN PATENT APPLICATION

(11) **EP 4 684 887 A1**
(43) Date of publication of application: **28.01.2026**
(21) Application number: 25189159.4
(22) Date of filing: 11.07.2025
(51) Int. Cl.: B06B 3/00, G01N 35/00, G01N 1/40, G01N 1/38, B01F 23/411

(54) **SYMMETRICAL HORN FOR ULTRASONIC SAMPLE PREPARATION**

(30) Priority: 23.07.2024 US 202418780795
(71) Applicant: Sonics & Materials Inc., Newtown, CT 06470 (US)
(72) Inventor: Rushton, Andrew, Southbury, 06708 (US); Vargas, Sr., Sigfredo, Waterbury, 06708 (US)
(74) Representative: Kanved, Nicolai

(57) **Abstract**

An ultrasonic horn includes a generally cylindrical input section having an energy input end adapted to be operably connected to an ultrasonic energy source, the energy input end comprising a generally flat surface, a generally cylindrical output section having a free end defining an energy output end, comprising a generally flat surface that is generally parallel to the generally flat surface of the energy input end, and a middle section disposed between the input and output sections, the middle section comprising at least one scallop defined by a side wall having a continuous curve. The input, middle and output sections together define a total horn length, and the ultrasonic horn is substantially symmetrical about an imaginary plane that bisects the total horn length and that is substantially parallel to the generally flat surface of the energy input end and the generally flat surface of the energy output end.

## Description

### FIELD OF THE INVENTION

The present invention relates generally to a system and method for ultrasonic sample preparation, and more particularly to such systems and methods wherein the samples to be processed are disposed in vessels, such as microplates or the like, and relatively large diameter horns are employed for ultrasonic energy transmission over a relatively large area.

### BACKGROUND OF THE INVENTION

Ultrasound is frequently used for sample preparation, including the processing, disrupting, and/or homogenizing of biological, chemical, and industrial substances. Microplates are frequently used in molecular biology applications, particularly in sample processing (i.e., genomic DNA, chromatin, cells, tissues, etc.) for a range of high-throughput analytical techniques, including next-generation sequencing, chromatin immunoprecipitation, quantitative polymerase chain reaction, and the like. Focused ultrasound may be used for sample processing. However, traditional technologies typically can only process one sample at a time, which prolongs processing time and significantly drives up the labor costs. Additionally, since processing occurs serially, a robotic system is used to raster scan the microplate across the single-focus transducer. This also drives up the instrument cost.

When there are multiple samples to process, sonication can be performed serially (one at a time), or the sonication system can be optimized in various ways to sonicate multiple samples simultaneously. When sonicating multiple samples simultaneously, it is desirable to achieve a certain level of uniformity that equates to consistent processing depending on the application. The level of uniformity should match that of serial (one at a time) sonication. There are many types of sonication methods and devices available, many of which can accommodate simultaneous sonication of multiple samples. Types of devices include cup horn sonicators, microplate horn sonicators, bath sonicators, focused sonicators (a holographic lens can be designed to produce multiple foci), and probe-tip sonicators, which are not designed for multi-sample sonication.

One consideration when sonicating multiple samples simultaneously is the uniformity of the acoustic field of the sonicator. Without a uniform field, techniques such as linear translation or circular rotation are required to ensure each sample receives the same amount of acoustic energy. Another design consideration is the acoustic scattering effect of the sample vessels themselves and how those interactions affect the uniformity of the acoustic field at the target axial depth (position of the sample). For example, consider that a perfectly uniform acoustic field is designed for sonicating a 96-well PCR plate, such that consistent acoustic energy can be measured at the location of each of the wells of the 96-well plate. The reflections, refractions, scattering, and absorption of the ultrasound energy by each of the PCR plate wells (including the contents of each well) may interfere with the incident acoustic wave in a way where all wells do not receive the same magnitude ultrasound energy over a period of active sonication time. Various techniques are known for attempting to address these issues, with great care being taken to ensure that each of the PCR plate wells received substantially the same amount of acoustic energy. However, regardless of the steps taken, it is most desirable for the horn to have as uniform an ultrasonic energy emission as possible across its entire face, with "hot" and "cold" spots to be avoided as much as possible.

The present invention, therefore, aims to provide such an ultrasonic horn, which is sized and shaped to simultaneously process multiple samples, with acoustic energy being emitted from the face of a free, generally planar output end, disposed opposite to an input end coupled to an ultrasonic energy generation system, with the output end face emitting the acoustic energy in a consistent and uniform distribution over substantially the entire face thereof.

### SUMMARY OF THE INVENTION

In accordance with one aspect of the present invention, an ultrasonic horn includes a generally cylindrical input section having a diameter (DI), a length (LI) and an energy input end adapted to be operably connected to an ultrasonic energy source, the energy input end comprising a generally flat surface, and a generally cylindrical output section having a diameter (DO), a length (LO) and a free end defining an energy output end, comprising a generally flat surface that is generally parallel to the generally flat surface of the energy input end. The diameter (DO) of the output section and the diameter (DI) of the input section are substantially equal and the length (LO) of the output section and the length (LI) of the input section are substantially equal. The ultrasonic horn also includes a middle section disposed between the input section and the output section, the middle section comprising at least one scallop defined by a side wall having a continuous curve and having a diameter reducing down from a diameter generally equal to the diameter (DI) of the input section on a side connected to the input section, and reducing down from a diameter generally equal to the diameter (DO) of the output section on a side connected to the output section, to a minimum throat diameter (DT). The input section, the middle section and the output section together define a total horn length, and the ultrasonic horn is substantially symmetrical about an imaginary plane that bisects the total horn length and that is substantially parallel to the generally flat surface of the energy input end and the generally flat surface of the energy output end.

In some embodiments, the ultrasonic horn comprises a sealing element disposed on a periphery of the output section, the sealing element adapted to facilitate engagement of the ultrasonic horn with a wall of a system for sample preparation, and a symmetry creating element disposed on a periphery of the input section, the symmetry creating element sized, shaped and positioned so as to define the symmetry about the imaginary plane. In certain of these embodiments, the sealing element comprises an o-ring channel formed in the periphery of the output section. In certain embodiments, the sealing element comprises a radial flange extending from the periphery of the output section.

In some embodiments, the ultrasonic horn further comprises an attachment element disposed on the generally flat surface of the energy input end. In some embodiments, the side wall of the at least one scallop has a constant radius of curvature.

In some embodiments, the middle section comprises a plurality of scallops sized, shaped and positioned so as to define the symmetry about the imaginary plane. In certain of these embodiments, the middle section comprises two scallops, each of the scallops having a constant radius of curvature.

In some embodiments, the middle section has formed therein a plurality of radial recesses adapted to receive an installation tool. In some embodiments, the ultrasonic horn defines a longitudinal axis, and the ultrasonic horn is substantially symmetrical about any longitudinal imaginary plane that longitudinally bisects the ultrasonic horn and that runs parallel to the longitudinal axis.

In some embodiments, the ultrasonic horn further comprises a recess formed in and/or a protuberance extending from the generally flat surface of the output section and a recess formed in and/or a protuberance extending from the generally flat surface of the input section sized, shaped and positioned so as to define the symmetry about the imaginary plane.

In accordance with another aspect of the present invention, a system for the ultrasonic preparation of samples disposed in a sample vessel comprisinges the ultrasonic horn as described above, along with a collar adapted to cooperate at a lower end thereof with the ultrasonic horn, the collar and the ultrasonic horn defining a reservoir adapted to receive a liquid. A support bracket is positioned on the collar and a rack is carried by the support bracket and positioned in a spaced apart relationship with the generally flat surface of the output section of the ultrasonic horn, the rack being configured to receive the sample vessel and maintain the sample vessel in a position spaced apart from the generally flat surface of the output section of the ultrasonic horn.

In some embodiments, an o-ring channel is formed in a periphery of the output section and an o-ring is disposed in the o-ring channel between the outer periphery of the output section and an inner periphery of the collar, the o-ring defining a liquid-tight seal between the ultrasonic horn and the collar.

In accordance with a further aspect of the present invention, an ultrasonic horn comprises a generally cylindrical input section having a diameter (DI), a length (LI) and an energy input end adapted to be operably connected to an ultrasonic energy source, the energy input end comprising a generally flat surface, and a generally cylindrical output section having a diameter (DO), a length (LO) and a free end defining an energy output end, comprising a generally flat surface that is generally parallel to the generally flat surface of the energy input end. The diameter (DO) of the output section and the diameter (DI) of the input section are substantially equal and the length (LO) of the output section and the length (LI) of the input section are substantially equal. A middle section is disposed between the input section and the output section, the middle section comprising at least one scallop defined by a side wall having a continuous curve with a constant radius of curvature and having a diameter reducing down from a diameter generally equal to the diameter (DI) of the input section on a side connected to the input section, and reducing down from a diameter generally equal to the diameter (DO) of the output section on a side connected to the output section, to a minimum throat diameter (DT). The input section, the middle section and the output section together define a total horn length, wherein the ultrasonic horn is substantially symmetrical about an imaginary plane that bisects the total horn length and that is substantially parallel to the generally flat surface of the energy input end and the generally flat surface of the energy output end. A sealing element is disposed on a periphery of the output section, the sealing element adapted to facilitate engagement of the ultrasonic horn with a wall of a system for sample preparation, and a symmetry creating element is disposed on a periphery of the input section, the symmetry creating element sized, shaped and positioned so as to define the symmetry about the imaginary plane. The ultrasonic horn defines a longitudinal axis, and the ultrasonic horn is substantially symmetrical about any longitudinal imaginary plane that longitudinally bisects the ultrasonic horn and that runs parallel to the longitudinal axis.

In some embodiments, the sealing element comprises an o-ring channel formed in the periphery of the output section. In some embodiments, the sealing element comprises a radial flange extending from the periphery of the output section. In some embodiments, the ultrasonic horn further comprises an attachment element disposed on the generally flat surface of the energy input end.

In some embodiments, the middle section comprises a plurality of scallops sized, shaped and positioned so as to define the symmetry about the imaginary plane. In certain of these embodiments, the middle section comprises two scallops. In some embodiments, the middle section has formed therein a plurality of radial recesses adapted to receive an installation tool.

In some embodiments, the ultrasonic horn further comprises a recess formed in and/or a protuberance extending from the generally flat surface of the output section, and a recess formed in and/or a protuberance extending from the generally flat surface of the input section sized, shaped and positioned so as to define the symmetry about the imaginary plane.

The present invention, therefore, provides an ultrasonic horn, which is sized and shaped to simultaneously process multiple samples, with acoustic energy being emitted from the face of a free, generally planar output end, disposed opposite to an input end coupled to an ultrasonic energy generation system, with the output end face emitting the acoustic energy in a consistent and uniform distribution over substantially the entire face thereof.

Other features and advantages of the invention will become more apparent from consideration of the following drawings.

### BRIEF DESCRIPTION OF THE DRAWINGS

FIG. 1 is a side, partially cross-sectional view showing a system for the ultrasonic preparation of samples disposed in a sample vessel incorporating an ultrasonic horn configured in accordance with an exemplary embodiment of the present invention;
FIG. 2 is a side isometric view of the inventive ultrasonic horn shown in FIG. 1;
FIG. 3 is a side plan view of the inventive ultrasonic horn shown in FIGS. 1 and 2;
FIG. 4 is a bottom plan view of the inventive ultrasonic horn shown in FIGS. 1-3;
FIGS. 5A-5C are side isometric, side elevational and bottom plan views of an ultrasonic horn similar to that shown in FIGS. 1-4, but incorporating two scallops in a middle portion thereof;
FIGS. 6A-6C are side isometric, side elevational and bottom plan views of an ultrasonic horn similar to that shown in FIGS. 1-4, but incorporating flanges instead of o-ring channels;
FIGS. 7A and 7B are bottom plan and side elevational views of an ultrasonic horn similar to that shown in FIGS. 1-4, but incorporating additional features on the faces thereof;
FIGS. 8A and 8B are finite element analysis (FEA) diagrams showing amplitude across the face of a horn, with FIG. 8A being an example of a prior art nonsymmetrical horn and FIG. 8B being an ultrasonic horn similar to that shown in FIGS. 1-4; and
FIGS. 9A and 9B are finite element analysis (FEA) diagrams showing amplitude across the face of a horn, with FIG. 9A being an ultrasonic horn similar to that shown in FIGS. 1-4 and FIG. 9B being a corresponding horn with an o-ring channel in the input portion having been omitted.

### DETAILED DESCRIPTION OF THE INVENTION

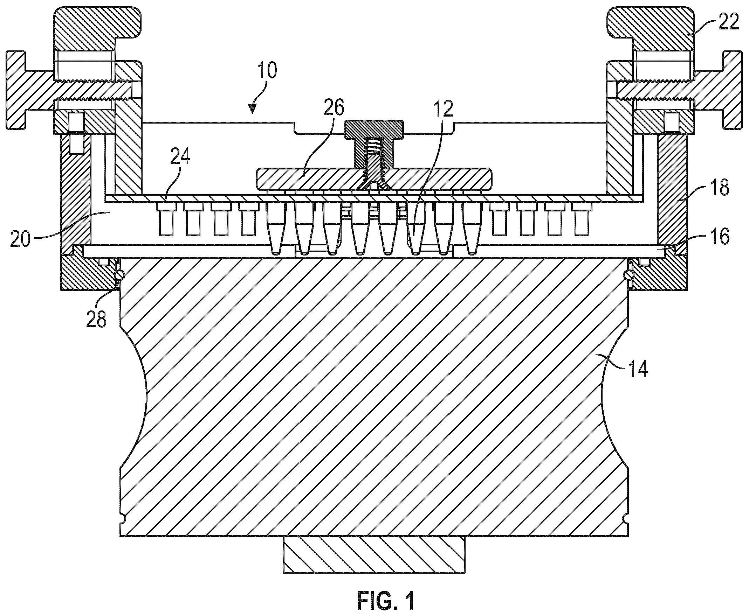

FIG. 1 generally illustrates a system (10) for the ultrasonic preparation of samples disposed in a sample vessel (12) in connection with which the ultrasonic horn of the present invention is particularly well suited for use. The system (10) generally includes an ultrasonic horn (14) of the present invention having a face (16) adapted to impart ultrasonic energy to the samples (as described in more detail below), a collar (18) adapted to cooperate at a lower end thereof with the horn (14), the collar (18) and the horn (14) defining a reservoir (20) adapted to receive a liquid (not shown), a support bracket (22) positioned on the collar (18), and a rack (24) carried by the support bracket (22) and positioned in a spaced apart relationship with the face (16) of the horn (14), the rack (24) being configured to receive the sample vessel (12) and maintain the sample vessel (12) in a position spaced apart from the face (16) of the horn (14). A weight (26) may be disposed on top of the sample vessel (12) to help retain it in place.

An o-ring (28) is disposed between the outer periphery of the horn (14) and the inner periphery of the collar (18) to define a liquid-tight seal between the horn (14) and the collar (18), as is described in more detail below. The liquid tight seal helps define the reservoir (20).

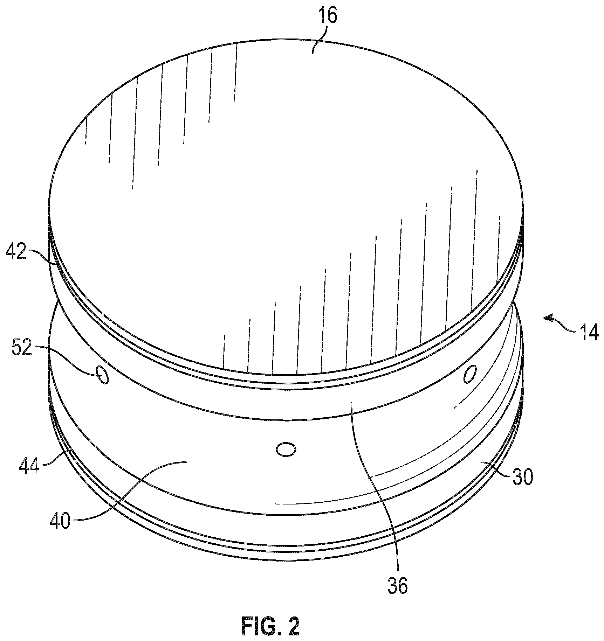

Referring specifically now to FIGS. 2-4 in addition to FIG. 1, the ultrasonic horn (14) in accordance with the present invention is shown in more detail. The horn (14) includes a generally cylindrical input section (30) having a diameter (DI), a length (LI) and an energy input end (32) adapted to be operably connected to an ultrasonic energy source (not shown), the energy input end (32) comprising a generally flat surface (34). The horn (14) also includes a generally cylindrical output section (36) having a diameter (DO), a length (LO) and a free end (38) defining an energy output end, comprising the generally flat face (16) that is generally parallel to the generally flat surface (34) of the energy input end. The diameter (DO) of the output section and the diameter (DI) of the input section are substantially equal and the length (LO) of the output section and the length (LI) of the input section are substantially equal.

The ultrasonic horn also includes a middle section (40) disposed between the input section (30) and the output section (36), the middle section (40) comprising at least one scallop (48) defined by a side wall (50) having a continuous curve and having a diameter reducing down from a diameter generally equal to the diameter (DI) of the input section (30) on a side connected to the input section (30), and reducing down from a diameter generally equal to the diameter (DO) of the output section (36) on a side connected to the output section (36), to a minimum throat diameter (DT). The input section (30), the middle section (40) and the output section (36) together define a total horn length (L). The horn (14) is substantially symmetrical about an imaginary plane (PX) that bisects the total horn length (L) and that is substantially parallel to the generally flat surface (34) of the energy input end (32) and the generally flat surface (16) of the energy output end (38).

The ultrasonic horn (14) also includes a sealing element (42) disposed on a periphery of the output section (36), the sealing element (42) adapted to facilitate engagement of the ultrasonic horn (14) with a wall of the system for sample preparation (e.g., the collar (18) in the embodiment shown in FIG. 1). A symmetry creating element (44) is disposed on a periphery of the input section (30), the symmetry creating element (44) sized, shaped and positioned so as to define the aforementioned symmetry about the imaginary plane (PX). It should be noted that the symmetry creating element (44) serves no functional purpose other than to create the desired symmetry, and remains unattached from other components during operation. In view of the lack of any operational function, it should also be recognized that elements such as symmetry creating element (44) have generally been omitted in the prior art.

In the embodiment shown in FIGS. 1-4, the sealing element (42) and the symmetry creating element (44) take the form of channels formed in the periphery of the output section (36) and the input section (30), respectively. More specifically, the sealing element (42) channel is configured as an o-ring channel, sized, shaped and positioned to receive the o-ring (28) and form the above-referenced liquid seal with the collar (18). The symmetry creating element (44) channel is sized, shaped and positioned accordingly in order to create the desired symmetry.

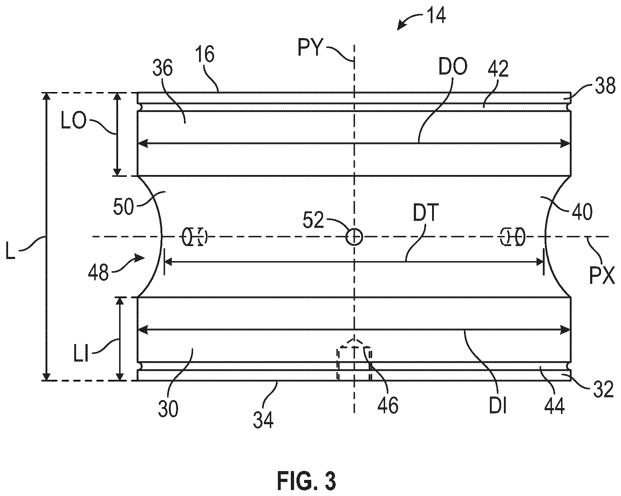

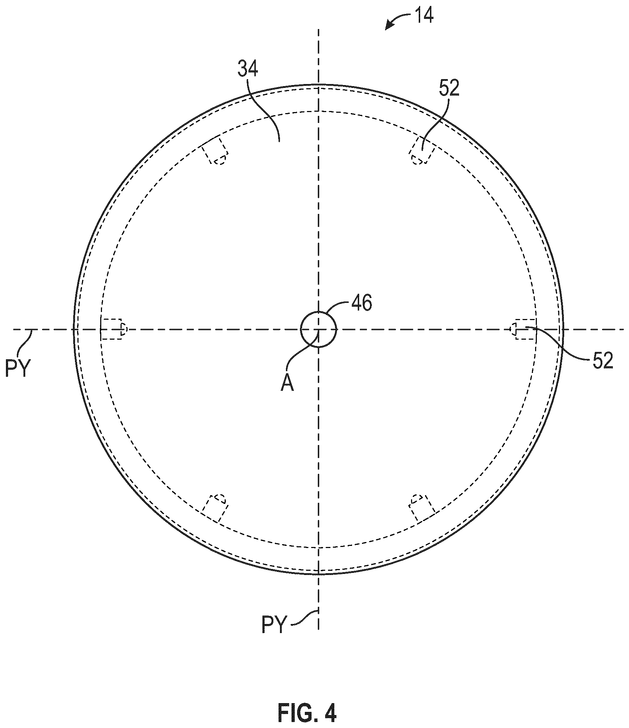

As best seen in FIGS. 3 and 4, the ultrasonic horn (14) may further include an attachment element (46) disposed on the generally flat surface (34) of the energy input end (32). As is known in the art, the attachment element (46) may take the form of a threaded blind hole in the generally flat surface (34) of the energy input end (32), which is adapted to receive a threaded stud (not shown) provided on an ultrasonic stack (e.g., converter or booster). Alternately, the attachment element (46) may take the form of a threaded stud (not shown) extending from the generally flat surface (34) of the energy input end (32), which is adapted to thread into a threaded blind hole (not shown) provided on an ultrasonic stack (e.g., converter or booster). While the provision of the attachment element (46) may appear to create an asymmetry, it should be noted that when coupled with the ultrasonic stack, the attachment element (46) is either filled with a stud that functionally becomes part of the horn, so as to create the desired symmetry, or in the alternative configuration noted above, the protruding stud functionally becomes part of the ultrasonic stack, again creating the desired symmetry of the ultrasonic horn.

In the embodiment shown in FIGS. 1-4, the side wall (50) of the scallop (48) has a constant radius of curvature. Also, as best seen in FIGS. 2-4, the middle section (40) has formed therein a plurality of radial recesses (52), such as spanner holes, adapted to receive an installation tool, such as a spanner. As best seen in FIGS. 3 and 4, the ultrasonic horn (14) defines a longitudinal axis (A), and the ultrasonic horn (14) is substantially symmetrical about any longitudinal imaginary plane (PY) (one such imaginary plane being shown in FIG. 3 and two such imaginary planes being shown in FIG. 4) that longitudinally bisects the ultrasonic horn (14) and that runs parallel to the longitudinal axis (A).

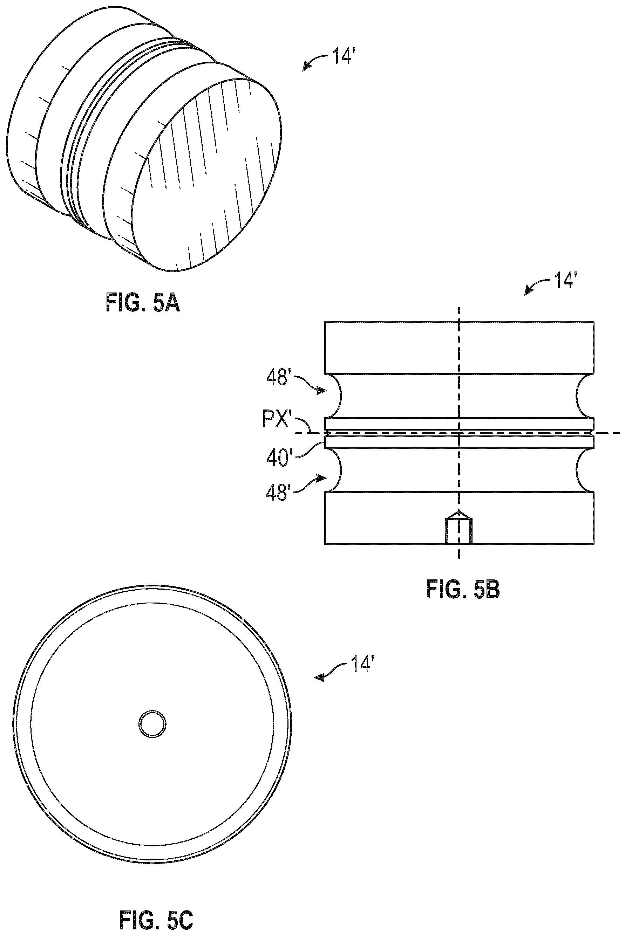

Referring now to FIGS. 5A-5C an ultrasonic horn (14') similar to that shown in FIGS. 1-4, is shown, with the main difference being that the middle section (40') comprises a plurality of scallops (48') sized, shaped and positioned so as to define the symmetry about the imaginary planes (PX'). In the shown embodiment, two scallops (48') are shown, each of the scallops (48') having a constant radius of curvature. However, it should be recognized that a greater or lesser number of scallops may be provided. What is important, however, is that however the scallops are configured, symmetry about the imaginary planes (PX') is maintained.

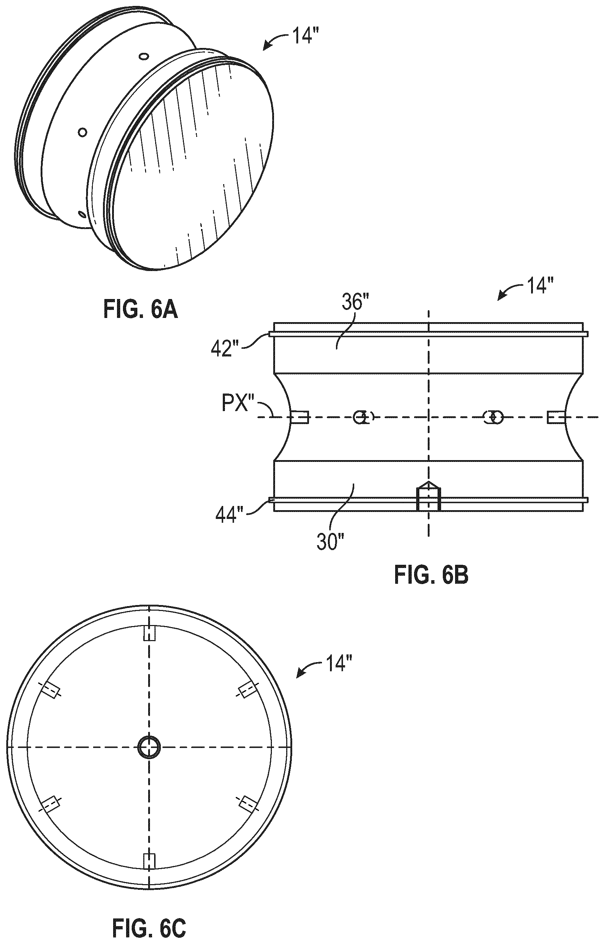

Referring now to FIGS. 6A-6C an ultrasonic horn (14") also similar to that shown in FIGS. 1-4, is shown, with the main difference being that the sealing element (42") and the symmetry creating element (44") take the form of flanges instead of o-ring channels. More specifically, the sealing element (42") takes the form of a radial flange extending from the periphery of the output section (36"), while the symmetry creating element (44") takes the form of a radial flange extending from the periphery of the input section (30"). Again, what is important is that however the sealing element (42") and the symmetry creating element (44") are configured, symmetry about the imaginary planes (PX") is maintained.

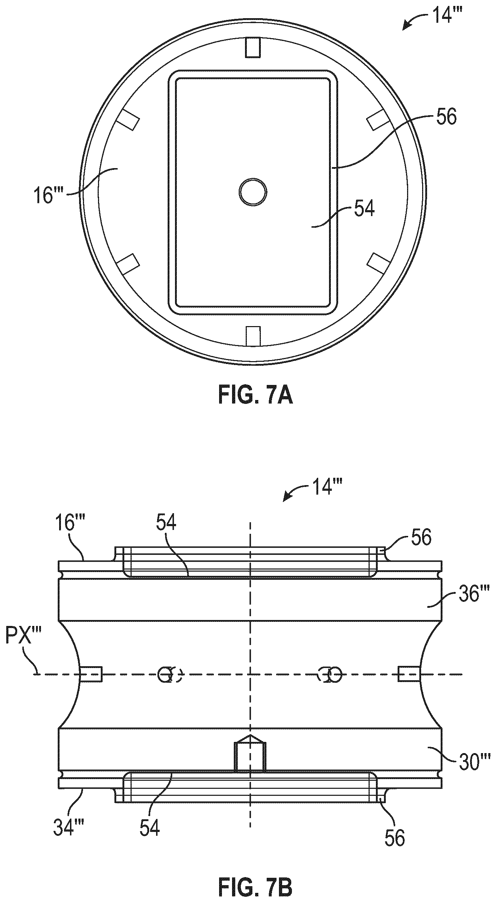

Turning now to FIGS. 7A and 7B, an ultrasonic horn (14‴) in accordance with the present invention may further be provided with one or more recesses (54) formed in and/or protuberances (56) extending from the generally flat surface (16‴) of the output section (36‴). In the illustrated embodiment, a combination of recesses (54) and protuberances (56) are shown for aiding in the placement of a spacer or the like that may be employed as part of operating the system (10). Other types of recesses (54) and/or protuberances (56) may also be employed. Of course, in order to maintain symmetry about the imaginary plane (PX‴), corresponding recesses (54) and/or protuberances (56) are also provided in or on the generally flat surface (34‴) of the input section (30‴).

During operation, the horn (14) may be vibrated in the ultrasonic frequency range by employing various technologies that are well-known in the art, such as by employing piezoelectric transducers. The illustrated horn (14) is particularly configured to operate at a frequency of 20 kHz ±50 Hz, although various other frequencies, such as 40 kHz, may be employed.

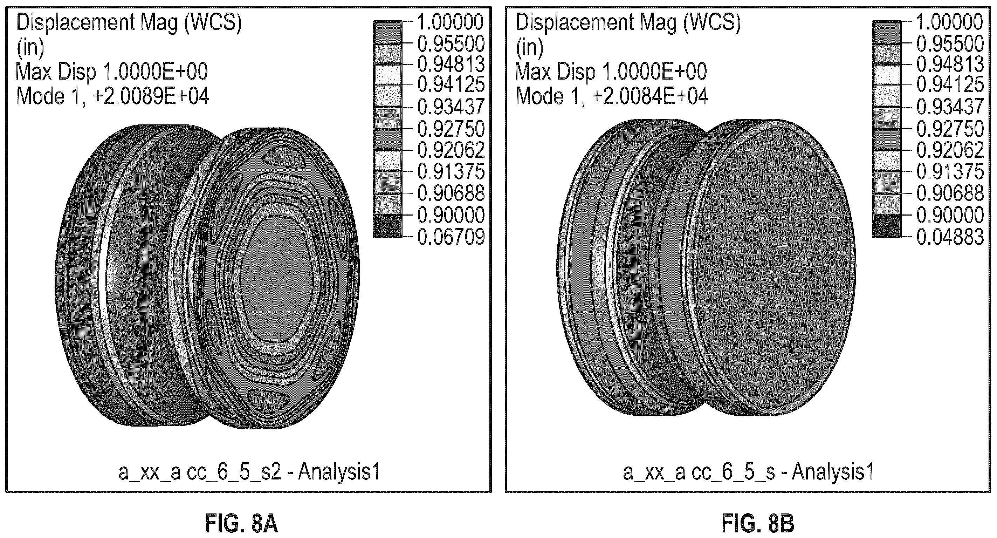

Turning now to FIGS. 8A and 8B, shown are finite element analysis (FEA) diagrams illustrating amplitude across the face of a horn, with FIG. 8A being an example of a prior art nonsymmetrical horn, such as the horn provided for in U.S. Patent Application Publication No. US 2002/0068872 A1. As can be seen, there are numerous "hot" and "cold" spots created across almost the entire output face of the horn. FIG. 8B, on the other hand, illustrates amplitude across the face of an ultrasonic horn according to the present invention, such as that shown in FIGS. 1-4. As can be seen, there is a generally uniform amplitude created across substantially the entire output face of the horn.

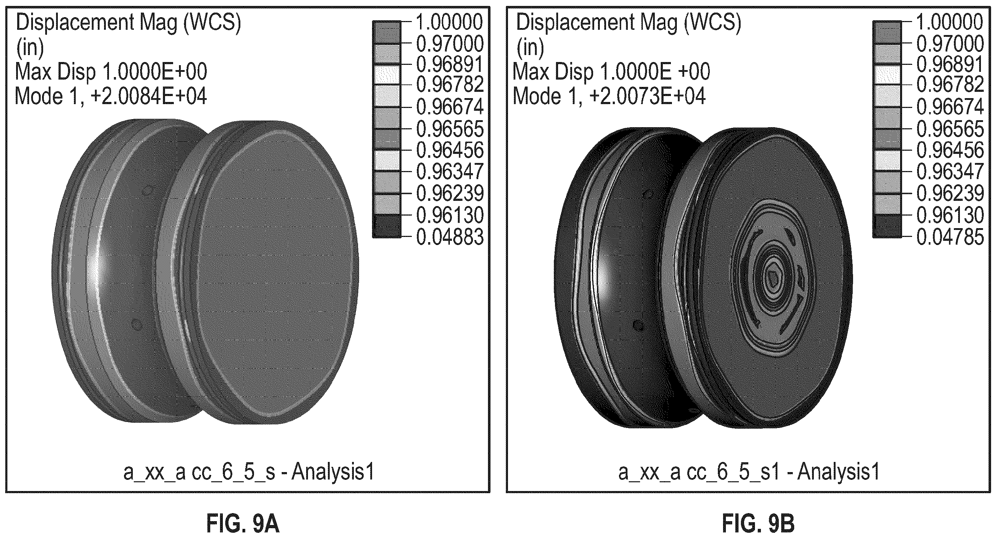

Perhaps even more surprising is the importance of the inventive generally non-functional, symmetry creating element (44) to creating a generally uniform amplitude provided across substantially the entire output face of the horn. FIGS. 9A and 9B are finite element analysis (FEA) diagrams highlighting this importance. FIG. 9A illustrates amplitude across the face of an ultrasonic horn according to the present invention, such as that shown in FIGS. 1-4. As can be seen, there is a generally uniform amplitude created across substantially the entire output face of the horn. FIG. 9B illustrates amplitude across the face of an ultrasonic horn that is identical to the one shown in FIG. 9A, except that the symmetry creating element (44), in this case a groove corresponding to an o-ring receiving groove formed in the output section, has been omitted. As can be clearly seen, the mere omission of the symmetry creating element (44) causes there to be significant hot/cold spots created on the output face of the horn, particularly toward the center thereof.

In view of the above, it will be recognized that the present invention provides an ultrasonic horn, which is sized and shaped to simultaneously process multiple samples, with acoustic energy being emitted from the face of a free, generally planar output end, disposed opposite to an input end coupled to an ultrasonic energy generation system, with the output end face emitting the acoustic energy in a consistent and uniform distribution over substantially the entire face thereof.

Although the invention has been described with reference to a particular arrangement of parts, features and the like, these are not intended to exhaust all possible arrangements or features, and indeed many other modifications and variations will be ascertainable to those of skill in the art.

## Claims

1. An ultrasonic horn comprising:
a generally cylindrical input section having a diameter (DI), a length (LI) and an energy input end adapted to be operably connected to an ultrasonic energy source, the energy input end comprising a generally flat surface;
a generally cylindrical output section having a diameter (DO), a length (LO) and a free end defining an energy output end, comprising a generally flat surface that is generally parallel to the generally flat surface of the energy input end;
wherein the diameter (DO) of said output section and the diameter (DI) of said input section are substantially equal and wherein the length (LO) of said output section and the length (LI) of said input section are substantially equal;
a middle section disposed between said input section and said output section, said middle section comprising at least one scallop defined by a side wall having a continuous curve and having a diameter reducing down from a diameter generally equal to the diameter (DI) of said input section on a side connected to said input section, and reducing down from a diameter generally equal to the diameter (DO) of said output section on a side connected to said output section, to a minimum throat diameter (DT);
wherein said input section, said middle section and said output section together define a total horn length; and
wherein said ultrasonic horn is substantially symmetrical about an imaginary plane that bisects the total horn length and that is substantially parallel to the generally flat surface of the energy input end and the generally flat surface of the energy output end.

2. The ultrasonic horn of Claim 1 further comprising:
a sealing element disposed on a periphery of said output section, said sealing element adapted to facilitate engagement of said ultrasonic horn with a wall of a system for sample preparation; and
a symmetry creating element disposed on a periphery of said input section, said symmetry creating element sized, shaped and positioned so as to define the symmetry about the imaginary plane.

3. The ultrasonic horn of Claim 2 wherein said sealing element comprises an o-ring channel formed in the periphery of said output section.

4. The ultrasonic horn of Claim 2 wherein said sealing element comprises a radial flange extending from the periphery of said output section.

5. The ultrasonic horn of any one of the preceding claims further comprising:
an attachment element disposed on the generally flat surface of the energy input end.

6. The ultrasonic horn of any one of the preceding claims wherein the side wall of the at least one scallop has a constant radius of curvature.

7. The ultrasonic horn of any one of the preceding claims wherein said middle section comprises a plurality of scallops sized, shaped and positioned so as to define the symmetry about the imaginary plane.

8. The ultrasonic horn of Claim 7 wherein said middle section comprises two scallops, each of the scallops having a constant radius of curvature.

9. The ultrasonic horn of any one of the preceding claims wherein said middle section has formed therein a plurality of radial recesses adapted to receive an installation tool.

10. The ultrasonic horn of any one of the preceding claims wherein said ultrasonic horn defines a longitudinal axis, and wherein said ultrasonic horn is substantially symmetrical about any longitudinal imaginary plane that longitudinally bisects said ultrasonic horn and that runs parallel to the longitudinal axis.

11. The ultrasonic horn of any one of the preceding claims further comprising:
a recess formed in and/or a protuberance extending from the generally flat surface of said output section; and
a recess formed in and/or a protuberance extending from the generally flat surface of said input section sized, shaped and positioned so as to define the symmetry about the imaginary plane.

12. A system for the ultrasonic preparation of samples disposed in a sample vessel, said system comprising:
the ultrasonic horn of any one of the preceding claims;
a collar adapted to cooperate at a lower end thereof with said ultrasonic horn, said collar and said ultrasonic horn defining a reservoir adapted to receive a liquid;
a support bracket positioned on said collar; and
a rack carried by said support bracket and positioned in a spaced apart relationship with the generally flat surface of said output section of said ultrasonic horn, said rack being configured to receive the sample vessel and maintain the sample vessel in a position spaced apart from the generally flat surface of said output section of said ultrasonic horn.

13. The system of Claim 12 wherein an o-ring channel is formed in a periphery of said output section and further comprising an o-ring disposed in the o-ring channel between the outer periphery of said output section and an inner periphery of said collar, said o-ring defining a liquid-tight seal between said ultrasonic horn and said collar.
